# EUROPEAN PATENT SPECIFICATION

(11) **EP 1 269 816 B1**
(45) Date of publication and mention of the grant of the patent: **15.12.2010**
(21) Application number: 02077023.6
(22) Date of filing: 22.05.2002
(51) Int. Cl.: A01B 59/00

(54) **Device for attaching farm implements to a tractor**
Vorrichtung zum Anbau von landwirtschaftlichen Geräten an einen Schlepper
Appareil pour la fixation d'outillages agricoles sur un tracteur

(30) Priority: 19.06.2001 IT BO20010388
(43) Date of publication of application: 02.01.2003
(73) Proprietor: CNH Italia S.p.A., 41100 Modena (IT)
(72) Inventor: Casali, Paolo, 41100 Modena (IT); Brooks, Paul John, 41100 Modena (IT)
(74) Representative: CNH IP Department

(56) References cited:
- DE-A- 1 675 025
- FR-A- 2 041 816
- US-A- 2 648 997
- US-A- 3 053 552
- US-A- 3 434 737

## Description

The present invention relates to tractors, and more specifically to devices for attaching farm implements to an agricultural tractor. Typically, such devices are formed by a so-called three-point hitch having two lower arms and one top link.

Such a three-point hitch attachment is described, for example, in US-A-3.053.552, which illustrates means for attaching a farm implement of any type, e.g. a plough, in a carried fashion to a tractor. The hitch comprises a top link and two lower arms which all three are connected in articulated manner to the tractor frame. Each lower arm is connected to a respective hydraulic lifting device whereas the length of the top link is adjustable by the operator rotating a sleeve connected at one end to the tractor frame, and at the other end to an attachment point of the implement. Accidental rotation of the sleeve is prevented by an elastic member connected to the sleeve and which can be lifted and lowered. In the embodiment described in US-A-3.053.552, when the top link is disconnected from the implement and raised, the elastic member is used to lock the top link in an upright position. However, since the elastic member is integral with the sleeve and thus moves in unison therewith, the tilt of the top link, in its inoperative position, depends on the position of the sleeve.

DE-A-16 75 025 discloses an adjustable top link for a three point hitch. To prevent unwarranted rotation of the sleeve and thus to avoid changing the length of the top link, the hand lever is moved to a rest position in a recess of a protective sleeve. No provisions are made to lock the link in a raised position.

Excessive tilting of the top link is without any grave consequence in the case of an implement attached to the rear of the tractor, but not in the case of front-mounted implements. In the latter case, excessive tilting of the top link in the rest position towards the front hood of the tractor could impede opening and closing of the hood.

It is therefore an object of the present invention to provide a fixed tilt angle for each possible length of the top link and to facilitate adjustment of the length of the top link.

Further advantages will be disclosed in the preferred embodiment described below.

According to a first aspect of the present invention, there is provided an adjustable top link, as claimed in Claim 1.

A non-limiting embodiment of the present invention will now be described by way of example with reference to the accompanying drawings, in which:
Figure 1 shows a three-dimensional assembly drawing of a device for attaching farm implements to a tractor in accordance with the present invention;
Figure 2 is a perspective view of a top link forming part of the Figure 1 device and shown with the component parts in a first position;
Figure 3 is a perspective view comparable to Figure 2 and shown with the component parts in a second position;
Figure 4a shows a first view of a first detail of the top link in Figures 2, 3;
Figure 4b shows a second side view of the first detail of the top link in Figures 2, 3;
Figure 4c shows a longitudinal section along line X-X of the first detail in Figure 4a;
Figure 5, 6 and 7 show respective second, third and fourth details of the top link in Figures 2, 3;
Figure 8a shows a plan view of a fifth detail of the top link in Figures 2, 3; and
Figure 8b shows a side view of the fifth detail in Figure 8a.

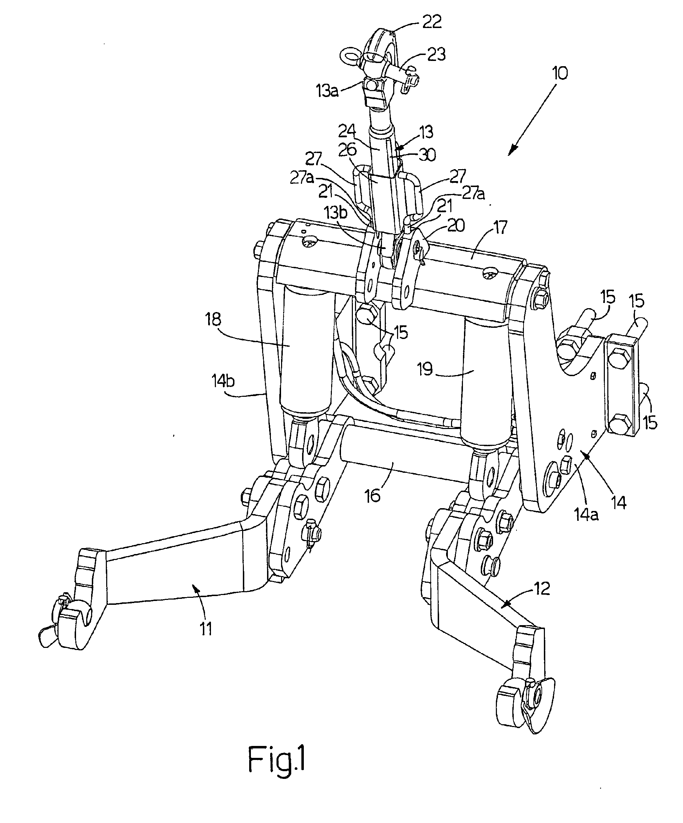

Number 10 in Figure 1 indicates a device, typically referred to as a three-point hitch, for attaching farm implements (not shown) to a tractor (not shown) in accordance with the present invention.

For the sake of simplicity, a number of mechanical and hydraulic components have been omitted in Figure 1, and, for the same reason, not all the devices shown in Figure 1 are described in detail in the present disclosure.

Attachment device 10 comprises, in conventional manner, two lower arms 11, 12 and a top link 13 which, in Figure 1, is shown in the raised position, i.e. disconnected from the farm implement.

As shown in Figure 1, attachment device 10 further comprises a frame 14 having two side plates 14a, 14b connected integrally to the tractor by a double set of bolts 15. Frame 14 is reinforced by a bottom crossbar 16 and a top crossbar 17. The lower arms 11, 12 are hinged in known manner to the bottom crossbar 16 and top crossbar 17 is provided with hydraulic cylinders 18, 19 for lifting and lowering respective arms 11, 12. The top crossbar 17 further comprises a lock device 20 for locking top link 13 in the upright position shown in Figure 1. The lock device 20 has at least one seat 21 for the purpose explained in detail later on.

At one free end 13a, top link 13 comprises a hook 22 having a device 23 by which to attach end 13a to the farm implement whereas the other end 13b of top link 13 is hinged to the top crossbar 17.

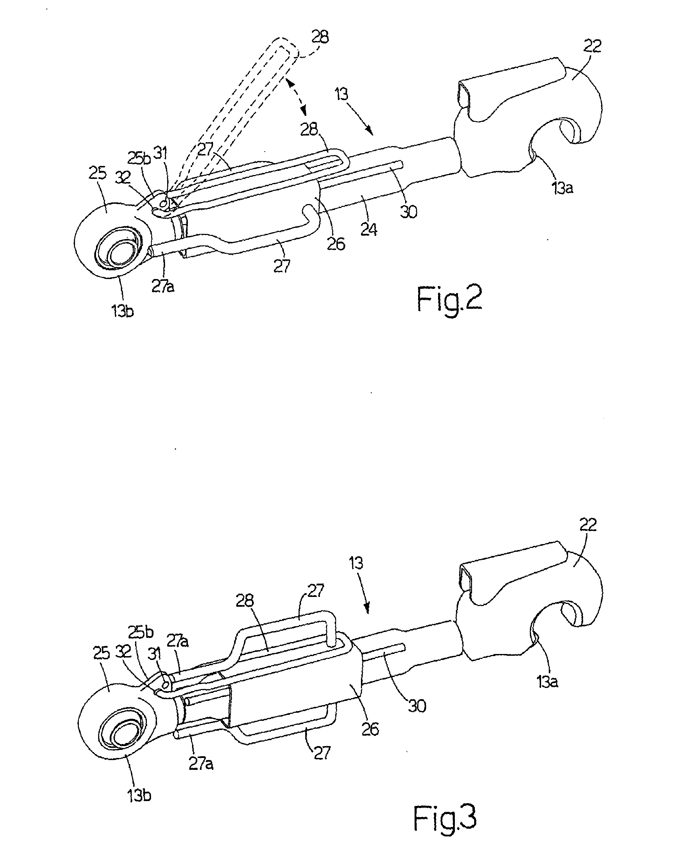

As shown in Figures 2 and 3, top link 13 comprises a substantially tubular central body 24 with a circular cross section, the already mentioned hook 22 at end 13a and a spherical joint 25 at end 13b for connection to top crossbar 17. The top link 13 further comprises a square-section sleeve 26 housing central body 24, which is fitted integrally on opposite sides with two handles 27 having projecting ends 27a for a purpose explained in detail later on. An elastic member 28 also is part of the top link 13 for a purpose which will be explained in detail below.

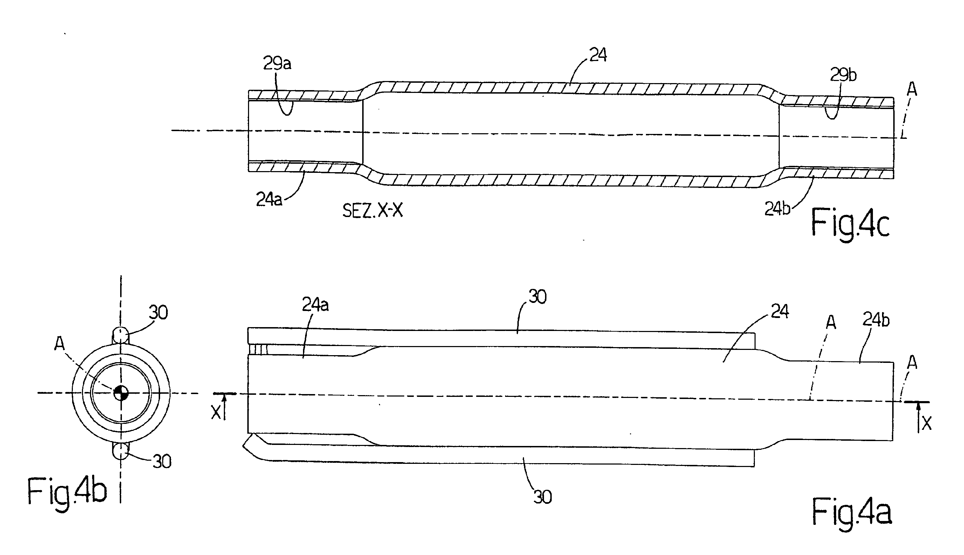

As shown in more detail in Figures 4a, 4b, 4c, the central body 24 has two tapered ends 24a, 24b having respective internal threads 29a, 29b for receiving corresponding ends of hook 22 and joint 25. Internal threads 29a and 29b are oppositely threaded, i.e. while the one is right-hand threaded, the other one is lefthand threaded. As such, the distance between the hook 22 and the joint 25 will either increase or decrease depending on the rotation direction of central body 24 about its central axis A.

With specific reference to Figures 4a and 4b, two metal rods 30 are welded 180° apart to the outer surface of central body 24; the rods 30 fitting in two diametrically opposed corners of sleeve 26, as seen in Figures 2 and 3. This allows to operatively connect circular-section central body 24 to square-section sleeve 26, so as to enable the operator, by means of sleeve 26, to rotate central body 24 about axis A. It furthermore enables sleeve 26 to slide in a direction parallel to axis A for reasons to be explained in detail later on.

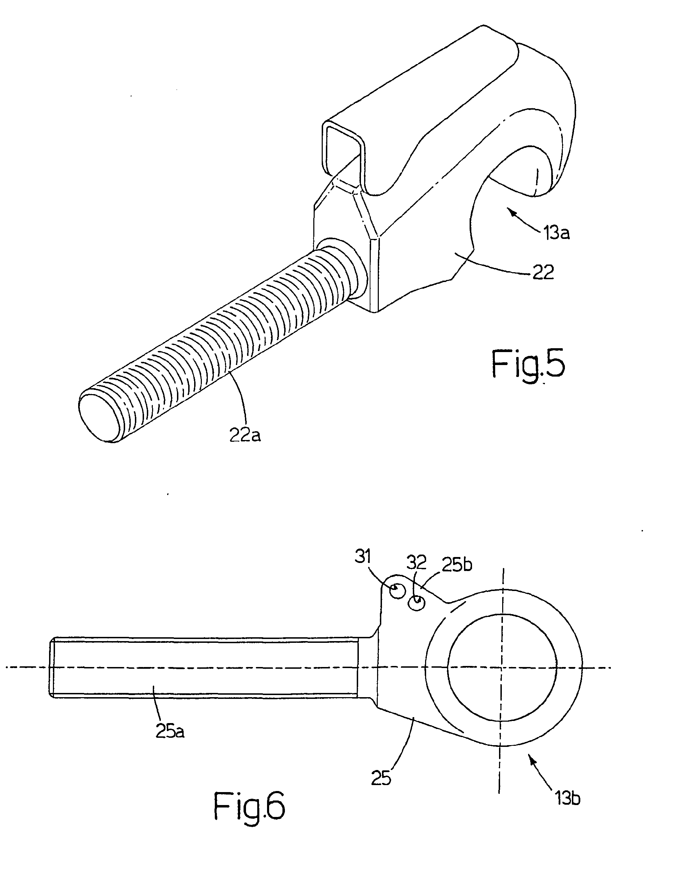

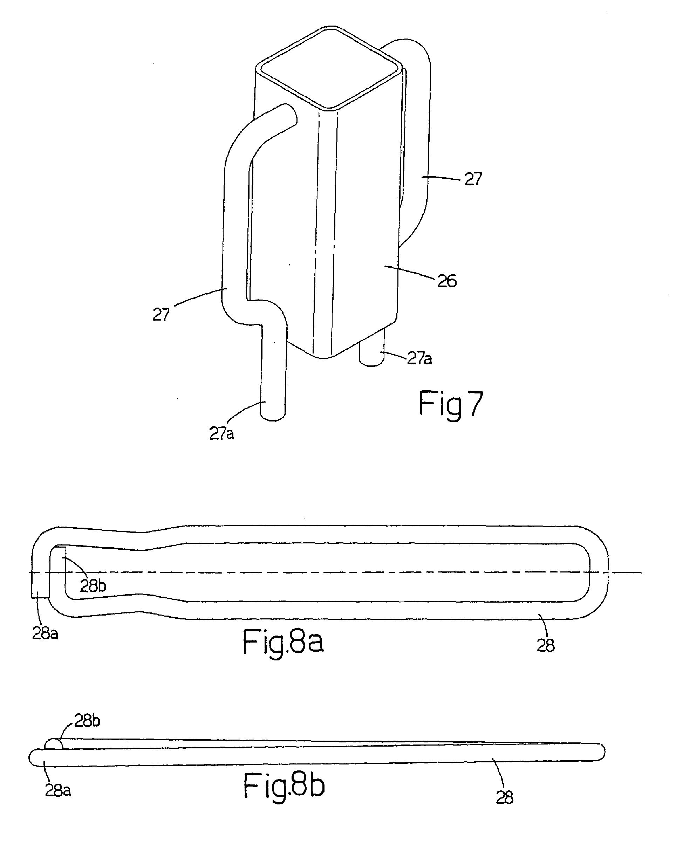

With reference to Figure 5, hook 22 is integral with a threaded shank 22a which screws on to thread 29b in central body 24. Similarly, and as shown in Figure 6, joint 25 has a threaded shank 25a which screws on to thread 29a in central body 24. As already stated, the threads in ends 24a, 24b being counter-rotating, top link 13 as a whole is lengthened or shortened as required when central body 24 is rotated one way or the other by means of sleeve 26. Joint 25 further comprises a lug 25b (Figure 6) having holes 31, 32 for housing the ends of elastic member 28. As shown clearly in Figure 7, sleeve 26 comprises two handles 27 having projecting ends 27a.

Another fundamental feature of top link 13 according to the invention is the elastic member 28, shown in more detail in Figures 2, 3 and 8a, 8b. With specific reference to Figures 8a, 8b, elastic member 28 is formed by bending a spring steel rod into a substantially rectangular shape having two bent superimposed ends 28a, 28b, which, as shown in Figure 8b, are not coplanar, so as to fit inside holes 31, 32 in joint 25 (Figure 6) and exert a given elastic pressure when elastic member 28 rests on an outer face of sleeve 26.

In actual use, and as shown in Figures 2 and 3, top link 13 is lengthened or shortened after raising elastic member 28, which, as stated, on account of the offset position of ends 28a, 28b and holes 31, 32 in lug 25b into which they are fitted, presses elastically on one face of sleeve 26 (Figure 2). When raised by the operator, elastic member 28 takes up the position shown by the dashed line in Figure 2.

Once elastic member 28 is raised and before effectively rotating sleeve 26, the operator may have to axially slide sleeve 26 in the direction of hook 22 to free the ends 27a of handles 27 from being obstructed by the lug 25b; the latter condition being shown in Figure 2. Sleeve 26, and therefore central body 24, is rotated by means of the two handles 27, so that, depending on the direction of rotation about axis A, hook 22 is moved towards or away from joint 25 to respectively shorten or lengthen top link 13. Once top link 13 is set to the required length, the operator simply lowers elastic member 28, which may be positioned as shown in Figure 3, i.e. on either side of one of the two handles 27, as such preventing accidental rotational movement of the sleeve 26 which could result in unwanted length adjustments of the top link 13.

As shown in Figure 1, when top link 13 is raised to an inoperative position, projecting ends 27a of handles 27 can be inserted inside seats 21 on lock device 20 by sliding sleeve 26 with respect to central body 24 in the direction of axis A towards the joint 25. This sliding movement is assisted by the rods 30 interposed between the outer surface of central body 24 and the inner surface of sleeve 26.

The locking of top link 13 in the rest position is thus fully independent of the length of the link 13, which is therefore positioned substantially perpendicular to the ground regardless of its length. This is particularly advantageous in the case of attachment devices 10 for front-mounted farm implements whereby, when fully raised, top link 13 in no way impedes opening or closing of the engine hood.

It will be appreciated that, although not shown in Figure 1, lock device 20 may comprise a number of pairs of seats 21 to enable different tilt positions of the top link 13 when disconnected from the farm implement. Further advantages are the straightforward design of top link 13, and the ease with which it can be adjusted in length.

As will be understood from the foregoing, the function of the sleeve 26 is threefold, namely : adjusting the length of the link 13 by rotating the central body 24; positioning the link 13 in an inoperative position; and, in co-operation with the elastic member 28, preventing unwanted length adjustments of link 13.

## Claims

1. An adjustable top link (13) of a device (10) for attaching an implement to a tractor;
said top link (13) comprises :
- a central body (24) inserted inside a sleeve (26);
- a connecting member (22) for attachment to an implement; said connecting member (22) having a threaded shank (22a) for threaded engagement with a thread (29b) formed in said central body (24);
- a joint (25) for connection to a reinforcing member (17) of said device (10); said joint (25) having another threaded shank (25a) for threaded engagement with another thread (29a) formed in said central body (24); and
- at least one handle (27) having a projecting end (27a); and
**characterised in that** said at least one handle (27) is integral with said sleeve (26), and said projecting end (27a) is lockable inside a seat (21) provided in a lock device (20) of said device (10) for attaching an implement to a tractor for locking said top link (13) in a rest position.

2. A top link (13) according to claim 1, **characterized in that** said central body (24) has a substantially circular cross section, and said sleeve (26) has a substantially square cross section; at least one rod (30) being integrally connected to the outer surface of said central body (24) to be housed in a corner of said sleeve (26), enabling the sleeve (26) on the one hand to rotate said central body (24) about a longitudinal axis (A), and on the other hand to slide with respect to said central body (24) in a direction defined by said axis (A).

3. A top link (13) according to claim 1 or 2, **characterized in that** the top link (13) further comprises an elastic member (28) for preventing unwanted rotation of said sleeve (26).

4. A top link (13) according to claim 3, **characterized in that** said elastic member (28) is substantially rectangularly shaped, and has two ends (28a, 28b) which are inserted inside respective holes (31, 32) formed in opposite faces of a lug (25b) on said joint (25).

5. A top link (13) according to claim 4, **characterized in that** said ends (28a, 28b) of said elastic member (28) and said holes (31, 32) are respectively offset with respect to each other.

6. A top link (13) according to any of the preceding claims 3 to 5, **characterized in that** said elastic member (28) is of such a length as to accommodate said at least one handle (27), so as to lock and prevent accidental rotation of said sleeve (26).

7. A top link (13) according to any of the preceding claims, **characterized in that** the sleeve (26) is movable to a position for fixing the top link (13) in an inoperative position.

8. A device (10) for attaching implements to a tractor, comprising an adjustable top link (13) according to any of the preceding claims.

9. A device (10) according to claim 8, **characterized in that** said lock device (20) is integral with said reinforcing member (17).

10. A device (10) according to claim 8 or 9, **characterized in that** said lock device (20) comprises a number of seats (21) enabling the top link (13) to be locked in different angular positions relative to the reinforcing member (17).

11. A device (10) according to any of the preceding claims 8 to 10, **characterized in that** two handles (27) are provided on opposite sides of the sleeve (26), each having a projecting end (27a) for engaging a pair of seats (21) provided in said reinforcing member (17).

## Patentansprüche

1. Einstellbares oberes Gestänge (13) einer Vorrichtung (10) zum Anbringen eines Arbeitsgerätes an einem Traktor;
wobei das obere Gestänge (13) Folgendes umfasst:
- einen zentralen Körper (24), der in das Innere einer Hülse (26) eingesetzt ist;
- einen Verbindungsteil (22) zum Anbringen an einem Arbeitsgerät, wobei der Verbindungsteil (22) einen Gewindeschaft (22a) für einen Schraubeingriff mit einem Gewinde (29b) aufweist, das in dem zentralen Körper (24) ausgebildet ist;
- ein Gelenk (25) zur Verbindung mit einem Verstärkungsteil (17) der Vorrichtung (10); wobei das Gelenk (25) einen weiteren Gewindeschaft (25a) für einen Schraubeingriff mit einem weiteren Gewinde (29a) aufweist, das in dem zentralen Körper (24) ausgebildet ist; und
- zumindest einen Handgriff (27), der ein vorspringendes Ende (27a) aufweist; und
**dadurch gekennzeichnet, dass** der zumindest eine Handgriff (27) einstückig mit der Hülse (26) ausgebildet ist und das vorspringende Ende (27a) im Inneren eines Sitzes (21) verriegelbar ist, der in einer Verriegelungsvorrichtung (20) der Vorrichtung (10) zum Anbringen des Arbeitsgerätes an dem Traktor zum Verriegeln des oberen Gestänges (13) in einer Ruheposition vorgesehen ist.

2. Oberes Gestänge (13) nach Anspruch 1, **dadurch gekennzeichnet, dass** der zentrale Körper (24) einen im Wesentlichen kreisförmigen Querschnitt aufweist und die Hülse (26) einen im Wesentlichen quadratischen Querschnitt aufweist; dass zumindest eine Stange (30) einstückig mit der äußeren Oberfläche des zentralen Körpers (24) verbunden ist, um in einer Ecke der Hülse (26) aufgenommen zu werden, was es der Hülse (26) ermöglicht, einerseits den zentralen Körper (24) um eine Längsachse (A) zu drehen und andererseits gegenüber dem zentralen Körper (24) in einer Richtung zu gleiten, die durch die Achse (A) definiert ist.

3. Oberes Gestänge (13) nach Anspruch 1 oder 2, **dadurch gekennzeichnet, dass** das obere Gestänge (13) weiterhin ein elastisches Element (28) zum Verhindern einer unerwünschten Drehung der Hülse (26) umfasst.

4. Oberes Gestänge (13) nach Anspruch 3, **dadurch gekennzeichnet, dass** das elastische Element (28) im Wesentlichen rechteckförmig geformt ist und zwei Enden (28a, 28b) aufweist, die in jeweilige Bohrungen (31, 32) eingesetzt werden, die auf gegenüberliegenden Stirnflächen einer Lasche (25b) auf dem Gelenk (25) ausgebildet sind.

5. Oberes Gestänge (13) nach Anspruch 4, **dadurch gekennzeichnet, dass** die Enden (28a, 28b) des elastischen Teils (28) und die Bohrungen (31, 32) jeweils gegeneinander versetzt sind.

6. Oberes Gestänge (13) nach einem der vorhergehenden Ansprüche 3 bis 5, **dadurch gekennzeichnet, dass** das elastische Element (28) eine derartige Länge aufweist, dass der zumindest eine Handgriff (27) aufgenommen wird, um auf diese Weise die Hülse (26) zu verriegeln und eine unerwünschte Drehung zu verhindern.

7. Oberes Gestänge (13) nach einem der vorhergehenden Ansprüche, **dadurch gekennzeichnet, dass** die Hülse (26) auf eine Position zum Festlegen des oberen Gestänges (13) in einer Ruhestellung bewegbar ist.

8. Vorrichtung (10) zum Anbringen eines Arbeitsgerätes an einem Traktor, mit einem einstellbaren oberen Gestänge (13) nach einem der vorhergehenden Ansprüche.

9. Vorrichtung (10) nach Anspruch 8, **dadurch gekennzeichnet, dass** die Verriegelungsvorichtung (20) einstückig mit dem Verstärkungsteil (17) ausgebildet ist.

10. Vorrichtung (10) nach Anspruch 8 oder 9, **dadurch gekennzeichnet, dass** die Verriegelungsvorr ichtung (20) eine Anzahl von Sitzen (21) umfasst, die eine Verriegelung des oberen Gestänges (13) in unterschiedlichen Winkelpositionen gegenüber dem Verstärkungsteil (17) ermöglichen.

11. Vorrichtung (10) nach einem der vorhergehenden Ansprüche 8 bis 10, **dadurch gekennzeichnet, dass** zwei Handgriffe (27) auf entgegengesetzten Seiten der Hülse (26) angeordnet sind die jeweils ein vorspringendes Ende (27a) für den Eingriff mit einem Paar von Sitzen (21) aufweisen, die in dem Verstärkungsteil (17) vorgesehen sind.

## Revendications

1. Elément de liaison supérieur ajustable (13) d' un dispositif (10) d' attache d' un outil à un tracteur, ledit élément de liaison supérieur (13) comprenant :
- un corps central (24) inséré à l'intérieur d' un manchon (26),
- un organe de connexion (22) destiné à la fixation à un outil, ledit organe de connexion (22) comprenant une tige filetée (22a) pour un engagement fileté avec un filetage (29b) façonné dans ledit corps central (24),
- un élément d' assemblage (25) destiné à une connexion à un élément de renforcement (17) du dit dispositif (10), ledit élément d' assemblage (25) comportant une autre tige filetée (25a) destinée à un engagement fileté avec un autre filetage (29a) façonné dans ledit corps central (24), et
- au moins une poignée (27) ayant une extrémité faisant saillie (27a), et
**caractérisé en ce que** la au moins une poignée (27) est solidaire avec ledit manchon (26), et ladite extrémité faisant saillie (27a) est verrouillable à l'intérieur d' une portée (21) prévue dans un dispositif de verrouillage (20) du dit dispositif (10) de fixation d' un outil à un tracteur pour verrouiller ledit élément de liaison supérieur (13) dans une position de repos.

2. Elément de liaison (13) selon la revendication 1, **caractérisé en ce que** ledit corps central (24) a une section transversale sensiblement circulaire, et ledit manchon (26) a une section transversale sensiblement carrée, au moins une barre (30) étant reliée de façon solidaire à la surface extérieure du dit corps central (24) pour être logée dans une encoignure du dit manchon (26), permettant au manchon (26) d' une part de faire tourner ledit corps central (24) autour d' un axe longitudinal (A), et d' autre part de coulisser par rapport au dit corps central (24) dans un sens défini par ledit axe (A).

3. Elément de liaison (13) selon la revendication 1 ou 2, **caractérisé en ce que** l'élément de liaison supérieur (13) comprend en plus un élément élastique (28) pour empêcher une rotation indésirable du dit manchon (26).

4. Elément de liaison (13) selon la revendication 3, **caractérisé en ce que** ledit élément élastique (28) a une forme sensiblement rectangulaire et a deux extrémités (28a, 28b) qui sont introduites dans des trous respectifs (31, 32) façonnés dans des faces opposées d' une patte (25b) sur ledit élément d' assemblage (25).

5. Elément de liaison (13) selon la revendication 4, **caractérisé en ce que** les dites extrémités (28a, 28b) du dit élément élastique (28) ainsi que les dits trous (31, 32) sont respectivement décalés.

6. Elément de liaison (13) selon l'une quelconque des revendications précédentes 3 à 5, **caractérisé en ce que** ledit élément élastique (28) a une longueur de telle sorte qu' il peut recevoir au moins une poignée (27), de manière à bloquer et empêcher une rotation accidentelle du dit manchon (26).

7. Elément de liaison (13) selon l'une quelconque des revendications précédentes, **caractérisé en ce que** le manchon (26) peut être déplacé vers une position pour immobiliser l'élément de liaison supérieur (13) dans une position de repos.

8. Dispositif (10) d' attache d' outils à un tracteur, comprenant un élément de liaison supérieur (13) ajustable selon l'une quelconque des revendications précédentes.

9. Dispositif (10) selon la revendication 8, **caractérisé en ce que** ledit dispositif de verrouillage (20) est solidaire avec l'élément de renforcement (17).

10. Dispositif (10) selon la revendication 8 ou 9, **caractérisé en ce que** ledit dispositif de verrouillage (20) comprend un certain nombre de portées (21) permettant à l'élément de liaison supérieur (13) d' être verrouillé dans différentes positions angulaires par rapport à l'élément de renforcement (17).

11. Dispositif (10) selon l'une quelconque des revendications précédentes 8 à 10, **caractérisé en ce que** deux poignées (27) sont prévues sur des côtés opposés du manchon (26), chacune ayant une extrémité faisant saillie (27a) pour engager dans une paire de portées (21) prévues dans ledit élément de renforcement (17).
